# EUROPEAN PATENT SPECIFICATION

(11) **EP 0 646 623 B1**
(45) Date of publication and mention of the grant of the patent: **10.01.2001**
(21) Application number: 94202843.2
(22) Date of filing: 01.10.1994
(51) Int. Cl.: C08L 23/04, C08K 3/22, C08K 5/03, C08K 5/49

(54) **Polymeric composition based on very low density polyethylenes and their use for lining tunnels**
Polymerische Zusammensetzung aus sehr niedriger Dichte, Polyethylene und ihre Verwendung für Tunnelauskleidungen
Composition de polymères à base de polyéthylène à tres basse densité et son utilisation pour le revêtement de tunnels

(30) Priority: 05.10.1993 IT MI932115
(43) Date of publication of application: 05.04.1995
(73) Proprietor: Polimeri Europa S.r.l., 90139 Palermo (IT)
(72) Inventor: Amico, Antonio, I-22064 Casatenovo, COMO (IT); Princiotta, Gualtiero, I-98061 Brolo, Messina (IT)
(74) Representative: Fusina, Gerolamo

(56) References cited:
- EP-A- 0 212 825
- EP-A- 0 508 415
- WO-A-92/13916
- GB-A- 2 185 262

## Description

The present invention relates to flame retarded polymeric compositions essentially constituted by a blend of two different very low density polyethylene grade containing a system capable of supplying flame retarding properties.

The present invention also relates to the use of such compositions in order to build suitable handworks for coating, or lining, building structures, and, in particular, motorway or railroad tunnels, for protective purposes.

It is well known that, thanks to its flexibility, mechanical and flame resistance characteristics, poly-vinyl chloride (referred to hereinafter as "PVC") has proved heretofore to be the most suitable materials for imitation leather, sealant tapes, films and protective sheets. Furthermore, in those uses for which particular flexibility (drapeability) and flame resistance characteristics are required, such as in tunnel lining and covering/coating building structures in general, PVC proved to be the most suitable material -- and the most widely used in the practice.

Unfortunately, the use of PVC necessarily leads to two main drawbacks:
(a) the plasticizer agents migrate with time, causing a decrease in flexibility;
(b) the flexibility decreases rapidly with decreasing temperature;
(c) when it is submitted to combustion, PVC releases large volumes of hydrochloric acid and dioxines.

Attempts to replace PVC in such applications were proposed recently; however, the results were not completely satisfactory.

The problem is the subject-matter of a number of Japanese documents (both journal papers and patents).

In particular, Japanese Laid Open Publication No. 50-56451 claims a process for manufacturing opaque films and sheets directly prepared from polyethylenes with a particular Melt Flow Rate (MFR) value and a specific Shear Sensitivity value, by extruding or moulding polyethylene under well specified conditions.

Another Japanese document, Japanese Laid Open Publication No. 59/2 15343, claims a process involving a compound of ethylene-vinyl acetate (EVA) copolymer with a Linear Low Density Polyethylene copolymer (LLDPE). In this case, the tensile modulus, heat resistance and covering power of the film or sheet are insufficient to meet the requirements.

Furthermore, Japanese Laid Open Publication No. H1-185306 claims a propylene copolymer with vinyl-trialkyl-silane, in which the latter is contained at a level of a few parts per million parts (ppm). In this case, the film or sheet display both low flexibility and low covering power values; however, their strength can be improved.

Japanese Laid Open Publication No. H2-92944 discloses a polypropylene based opaque sheet prepared from polymeric blends constituted by polypropylene (PP) blended with High Density Polyethylene (HDPE) and an inorganic filler.

In this case the tensile modulus, heat resistance and covering power of the sheets were improved.

However, the building handwork displays still low flame resistance and poor processability.

GB-A- 2185262 describes a polyolefin composition containing (A) 100 parts by weight of polyolefin, (B) 20 to 70 parts by weight of an organic fire retardant, (D) 0.5 to 30 parts by weight of an antioxidant, (E) 10 to 60 parts by weight of an insulation-improving agent, and (F) 1.0 to 50 parts by weight of an antioxidant aid. This composition shows excellent fire retardancy, heat aging resistance, cut-through properties, and mechanical and electric properties.

EP-A- 212825 relates to a flame-retardant olefin polymer composition containing 100 parts by weight of a resin component, said resin component consisting essentially of the following a) and b):
a) 60-99 % by weight of a copolymer of ethylene and a carboxyl-containing monomer or a derivative thereof and
b) 1-40% by weight of an olefin polymer modified with an unsaturated carboxylic acid or a denvative thereof; and
c) 20-200 parts by weight of an inorganic flame retardant.

WO-A- 9213916 is directed to a composition stabilized against thermal crosslinking and consequent reduction of its melt index, comprising a uniform dispersion of antimony oxide in a blend of a matrix polymer which is a dipolymer of ethylene with an ethylenically unsaturated carboxylic acid or terpolymer of ethylene with an ethylenically unsaturated carboxylic acid and with another ethylenically unsaturated comonomer, carbon dioxide or sulfur dioxide; an organo-halogen fire-retardant ; and a stabilizing polymer which is a high melt index copolymer of ethylene with acrylic or methacrylic acid. Such compositions are useful as adhesive layers in laminates used in packaging and building construction.

More recently, in European Patent Application No. 0 508 415 A2 polymeric blends were proposed which are based on homo- or copolymeric PP as the "A" component, VLDPE as the "B" component, modified polymers as the "D" component, and flame retardant fillers as the "E" component. The use of such compositions is for manufacturing adhesive tapes and, more generally, opaque films useful in the production of bags and cases, or in inner car finishes in automobile industry.

Such materials display good modulus values, high enough flexibility at room temperature and impact strength values; howewer, it proved to be unsuitable for the above mentioned uses, i.e., coating/lining building structures.

In fact, the application temperatures of round 0°C, the characteristics of high weldability and the severe flame behaviour regulations (DIN 4102 B1) required for those applications, render them unsuitable for such an usage. Furthermore, the balance of such properties, i.e., low temperature flexibility combined with extremely good flame retardant properties, is not explicitly mentioned.

The problem existed hence of providing suitable materials for coating building structures, in particular lining motorway and railroad tunnels, which should not be constituted by the usual PVC grades, because the Latter suffer from the above reminded negative characteristics.

The present Applicant has surprisingly found now that VLDPE can be used for coating/lining building structures, because the compositions which are disclosed in detail in the following, display such a set of properties which enable it to overcome all of the drawbacks previously shown by the prior art.

In fact, the present Applicant found that when VLDPE polyethylenes with suitable characteristics are blended in suitable amounts, together with a particular flame retardant system consisting of suitable halogenated organic compounds and inorganic fillers, sheet are obtained which combine an extremely good flexibility at application temperatures (of round 0°C) with good mechanical characteristics associated with an extremely favourable flame behaviour and complete absence of release of hydrochloric acid and dioxines during the combustion.

Therefore, the object of the present invention are polymeric compositions, suitable for lining or coating building structures, essentially constituted by, based on the total composition : of from 70 to 95% by weight, of a blend of two different very low density polyethylenes (A) and (B) having the following characteristics :
(A) VLDPE which is an ethylene-co-alpha-olefin copolymer characterized by MFR values (190°C, 2.16 kg) of from 0.1 to 1 g/10 minutes and density values of from 0.860 to 0.900 g/cm³;
(B) VLDPE which is an ethylene-co-alpha-olefin copolymer characterized by MFR values (190°C, 2.16 kg) of from 1 to 20 g/10 minutes and density values of from 0.860 to 0.900 g/cm³; and
(C) from 4 to 20% by weight of at least one flame retardant additive belonging to the class of halogenated aromatic compounds, possibly with phosphate groups, and blends thereof;
(D) from 1 to 10% by weight of inorganic filler as a flame retardant additive belonging to the class of antimony and zinc oxides or borates.
A further object of the present invention are sheets based on the above said compositions, with the possible addition of pigments, and suitable for use for coating building industries, in particular lining motorway and railroad tunnels.

A preferred aspect of the present invention are polymeric compositions essentially constituted by, based on the total composition, of from 74 to 87% by weight of a blend of two different very low density polyethylenes (A) and (B), having the following characteristics :
(A) VLDPE which is an ethylene-co-alpha-olefin copolymer characterized by MFR values (190°C, 2.16 kg) of from 0.1 to 1 g/10 minutes and density values of from 0.860 to 0.900 g/cm³;
(B) VLDPE which is an ethylene-co-alpha-olefin copolymer characterized by MFR values (190°C, 2.16 kg) of from 1 to 20 g/10 minutes and density values of from 0.860 to 0.900 g/cm³;
(C) from 10 to 20 by weight of at least one flame retardant additive belonging to the class of halogenated aromatic compounds, possibly with phosphate groups, and blends thereof;
(D) from 3 to 6% by weight of inorganic filler as a flame retardant additive belonging to the class of antimony and zinc oxides or borates.
Suitable polyethylenes for preparing the flame retarded compositions according to the present invention are, as said, very low density polyethylene.

In particular, VLDPE (which in reality results to be an ethylene copolymer with alpha-olefins), which constitutes the (A) and (B) components of the present invention, are polymers known from the prior art; also their manufacturing methods have been known for some years.

They furthermore are easily found materials from the market.

For example, the polyethylene grade which constitutes the (A) component of the blend according to the present invention, which is characterized by an MFR (190°C; 2.16 kg) value of 0.7 g/10 minutes and a density of 0.900 g/cm³, is available from the market under the trade name Clearflex FFDO ex Enichem, and the VLDPE grade which constitutes the (B) component, characterized by an MFR (190°C; 2.16 kg) value of 2.5 g/10 minutes and a density of 0.885 g/cm³, is available from the market under the trade name Clearflex CHGO ex Enichem.

As the flame retardant additive which constitutes the (C) component of the compositions according to the present invention, the following compounds are particularly suitable: decabromo diphenyl oxide (marketed under the trade name Saytex E 101); ethyl bis(tetrabromo phthalimide) (marketed under the trade name Saytex BT93); decabromo diphenyl ethane (marketed under the trade name Saytex 8010).

For use as the (D) component, the following oxides and borates are particularly suitable: antimony trioxide, antimony sesquioxide, zinc borate.

The compositions according to the present invention can furthermore contain, additionally to the (A), (B), (C) and (D) components, one or more components selected from fillers, pigments, stabilizers and dyes. Among these, suitable dyes for produced colour sheets are used with particular frequency.

The compositions of the present invention display good general characteristics of processability during the steps of handworks building and application thereof.

The properties which characterize the polymeric compositions of the present invention can be summarized as follows:
-- The particularly low density of the polymeric components endows the blends with properties which cause them to behave like elastomers, in particular an inherent flexibility comprised within the range of from 75 to 90, as Shore A Hardness.
-- Therefore, the blends according to the present invention display very small flexibility losses with decreasing temperature, contrarily to PVC, in which the crystallization point of the plasticizers used constitutes the low threshold value of application temperature range. At normal use temperatures (of round 0°C), the VLDPE based blends result hence to be more flexible than presently used PVC;
-- The polyolefinic character of the blends of the present invention secures an extremely good processability according to all presently used fabrication technologies and, furthermore, thanks to the inherent heat stability of VLDPE matrix, enables processing temperatures to be used which are definitely higher than of PVC, thus determining a considerable increase in reliability of such a material fabrication process;
-- The blends of the present invention display good mechanical characteristics even at low temperatures, thanks to the well known cold resistance properties of polyethylenic matrixes (Glass transition temperature T_{g} < -70°C); owing to the high level of amorphous polymer contained in the polymeric components of the blends of the present invention, the weldability of said blends results to be very good both in terms of weld strength and in terms of easiness of welding;
-- The addition of suitable flame retardant systems made it possible fire behaviours to be accomplished which are excellent according to both UL 94(VO) and DIN 4102/B1 standards, however without compromising the characteristics of the polymeric base. Furthermore, the types and the low contents of halogenated additives makes it possible low halogen releases to be secured during forced combustion -- with such released volumes being approximately 10% of halogens released by presently used PVC. Furthermore, under such conditions the absence is observed of dioxines and chlorinated compounds in the released smoke.

The polymeric compositions of the present invention are prepared by using any of the techniques known from the prior art.

In order to exemplify such techniques, the compositions are prepared by blending the several components [i.e., (A), (B), (C) and (D) components] on a twin screw Werner ZSK extruder.

Instead of the Werner ZSK blender, any blenders can be used which are capable of supplying the same uniform blending.

The general aspects of the instant invention having thus being disclosed, the following specific examples are given for the only purpose of illustrating the details of the invention. In no way shall they be construed as being limitative hereof.

All indicated compositions and percent values are by weight unless differently stated.

### Example 1

| | | |
|---|---|---|
| (A) Component | | 37 % |
| (B) Component | | 37 % |
| (C) Component | 20 % | |
| (D) Component | 6 % | |
| MFI (190°C, 2.16 kg) | g/10 min | 1.1 |
| Tensile strength | MPa | 13 |
| Elongation at break | % | 860 |
| Shore A Hardness (15 sec) | --- | 83 |
| Fire behaviour | UL 94 | V0 |

### Example 2

| | | |
|---|---|---|
| (A) Component | 8 % | |
| (B) Component | 76 % | |
| (C) Component | 13 % | |
| (D) Component | 5 % | |
| MFI (190°C, 2.16 kg) | g/10 min | 1.3 |
| Tensile strength | MPa | 14 |
| Elongation at break | % | 1060 |
| Shore A Hardness (15 sec) | --- | 78 |
| Fire behaviour | UL 94 | VO |

### Example 3

| | | |
|---|---|---|
| (A) Component | 58 % | |
| (B) Component | 29 % | |
| (C) Component | 10 % | |
| (D) Component | 3 % | |
| MFI (190°C, 2.16 kg) | g/10 min | 0.86 |
| Tensile strength | MPa | 15 |
| Elongation at break | % | 900 |
| Shore A Hardness (15 sec) | --- | 85 |
| Fire behaviour | UL 94 | V0 |

## Claims

1. Polymeric compositions, suitable for lining or coating building structures, essentially constituted by, based on the total composition: of from 70 to 95% by weight, of a blend of two different very low density polyethylenes (A) and (B) having the following characteristics:
(A) VLDPE which is an ethylene-co-alpha-olefin copolymer characterized by MFR values (190°C, 2.16 kg) of from 0.1 to 1 g/10 minutes and density values of from 0.860 to 0.900 g/cm³;
(B) VLDPE which is an ethylene-co-alpha-olefin copolymer characterized by MFR values (190°C, 2.16 kg) of from 1 to 20 g/10 minutes and density values of from 0.860 to 0.900 g/cm³; AND
(C) from 4 to 20% of at least one flame retardant additive belonging to the class of halogenated aromatic compounds, possibly with phosphate groups, and blends thereof;
(D) from 1 to 10% of inorganic filler as a flame retardant additive belonging to the class of antimony and zinc oxides or borates.

2. Polymeric compositions according to claim 1, constituted by, based on the total composition, of from 74 to 87% by weight of a blend of two different very low density polyethylenes (A) and (B), having the following characteristics :
(A) VLDPE which is an ethylene-co-alpha-olefin copolymer characterized by MFR values (190°C, 2.16 kg) of from 0.1 to 1 g/10 minutes and density values of from 0.860 to 0.900 g/cm³;
(B) VLDPE which is an ethylene-co-alpha-olefin copolymer characterized by MFR values (190°C, 2.16 kg) of from 1 to 20 g/10 minutes and density values of from 0.860 to 0.900 g/cm³; AND
(C) from 10 to 20% by weight of at least one flame retardant additive be Longing to the class of halogenated aromatic compounds, possibly with phosphate groups, and blends thereof;
(D) from 3 to 6% by weight of inorganic filler as a flame retardant additive belonging to the class of antimony and zinc oxides or borates.

3. Use of the polymeric composition according to claim 1 or 2, for coating or lining building structures.

4. Use according to claim 3, for lining motorway and railroad tunnels.

## Patentansprüche

1. Polymerzusammensetzungen, die zum Auskleiden oder Beschichten von Baustrukturen geeignet sind, und im wesentlichen zusammengesetzt sind, bezogen auf die Gesamtzusammensetzung aus 70 bis 95 Gew.-% eines Gemisches aus zwei unterschiedlichen Polyethylenen (A) und (B) mit sehr niedrigen Dichten (VLDPE "very low density polyethylenes") mit den folgenden Eigenschaften:
(A) VLDPE, nämlich ein Ethylen-co-alpha-Olefin-Copolymer, charakterisiert durch MFR-Werte (190°C, 2,16 kg) von 0,1 bis 1 g/10 Minuten und Dichtewerte von 0,860 bis 0,900 g/cm³;
(B) VLDPE, nämlich ein Ethylen-co-alpha-Olefin-Copolymer, charakterisiert durch MFR-Werte (190°C, 2,16 kg) von 1 bis 20 g/10 Minuten und Dichtewerte von 0,860 bis 0,900 g/cm³; und
(C) von 4 bis 20% von mindestens einem flammenhemmenden Additiv, das zur Klasse halogenierter aromatischer Verbindungen, möglicherweise mit Phosphatgruppen und deren Gemischen, gehört;
(D) von 1 bis 10% eines anorganisches Füllstoffes als flammenhemmendes Additiv, das zur Klasse der Antimon- und Zinkoxide oder -borate gehört.

2. Polymerzusammensetzungen nach Anspruch 1, zusammengesetzt, bezogen auf die Gesamtzusammensetzung, aus 74 bis 87 Gew.-% eines Gemisches aus zwei unterschiedlichen Polyethylenen (A) und (B) mit sehr niedrigen Dichten mit den folgenden Eigenschaften:
(A) VLDPE, nämlich ein Ethylen-co-alpha-Olefin-Copolymer, charakterisiert durch MFR-Werte (190°C, 2,16 kg) von 0,1 bis 1 g/10 Minuten und Dichtewerte von 0,860 bis 0,900 g/cm³;
(B) VLDPE, nämlich ein Ethylen-co-alpha-Olefin-Copolymer, charakterisiert durch MFR-Werte (190°C, 2,16 kg) von 1 bis 20 g/10 Minuten und Dichtewerte von 0,860 bis 0,900 g/cm³; und
(C) 10 bis 20 Gew.-% von mindestens einem flammenhemmenden Additiv, das zur Klasse der halogenierten aromatischen Verbindungen, möglicherweise mit Phosphatgruppen und deren Gemischen, gehört;
(D) 3 bis 6 Gew.-% eines anorganischen Füllstoffes als flammenhemmendes Additiv, das zur Klasse der Antimon- und Zinkoxide oder -borate gehört.

3. Verwendung der polymeren Zusammensetzung nach einem der Ansprüche 1 oder 2 zur Beschichtung oder Auskleidung von Baustrukturen.

4. Verwendung nach Anspruch 3 zum Auskleiden von Kraftfahrzeug- und Eisenbahntunneln.

## Revendications

1. Compositions polymères appropriées pour revêtir ou recouvrir des structures de construction, constituées essentiellement, par rapport à la composition totale, par 70 à 95% en masse d'un mélange de deux polyéthylènes très basse densité différents (A) et (B) ayant les caractéristiques suivantes:
(A) un VLDPE qui est un copolymère d'éthylène et d'alpha-oléfine caractérisé par des valeurs de MFR (190°C, 2,16 kg) de 0,1 à 1 g/10 minutes et des valeurs de densité de 0,860 à 0,900 g/cm³;
(B) un VLDPE qui est un copolymère d'éthylène et d'alpha-oléfine caractérisé par des valeurs de MFR (190°C, 2,16 kg) de 1 à 20 g/10 minutes et des valeurs de densité de 0,860 à 0,900 g/cm³; et
(C) de 4 à 20% d'au moins un additif ignifugeant appartenant à la classe des composés aromatiques halogénés, éventuellement avec des groupes phosphate, et leurs mélanges;
(D) de 1 à 10% de charge inorganique comme additif ignifugeant appartenant à la classe des oxydes ou borates d'antimoine et de zinc.

2. Compositions polymères selon la revendication 1 constituées, par rapport à la composition totale, par 74 à 87% en masse d'un mélange de deux polyéthylènes très basse densité différents (A) et (B) ayant les caractéristiques suivantes:
(A) un VLDPE qui est un copolymère d'éthylène et d'alpha-oléfine caractérisé par des valeurs de MFR (190°C, 2,16 kg) de 0,1 à 1 g/10 minutes et des valeurs de densité de 0,860 à 0,900 g/cm³;
(B) un VLDPE qui est un copolymère d'éthylène et d'alpha-oléfine caractérisé par des valeurs de MFR (190°C, 2,16 kg) de 1 à 20 g/10 minutes et des valeurs de densité de 0,860 à 0,900 g/cm³; et
(C) de 10 à 20% en masse d'au moins un additif ignifugeant appartenant à la classe des composés aromatiques halogénés, éventuellement avec des groupes phosphate, et leurs mélanges;
(D) de 3 à 6% en masse de charge inorganique comme additif ignifugeant appartenant à la classe des oxydes ou borates d'antimoine et de zinc.

3. Utilisation de la composition polymère selon la revendication 1 ou 2 pour recouvrir ou revêtir des structures de construction.

4. Utilisation selon la revendication 3 pour revêtir des tunnels routiers et ferroviaires.
